# EUROPEAN PATENT APPLICATION

(11) **EP 1 626 523 A1**
(43) Date of publication of application: **15.02.2006**
(21) Application number: 04730669.1
(22) Date of filing: 30.04.2004
(51) Int. Cl.: H04L 9/14, H04N 7/24

(54) **RECEIVER APPARATUS FOR MPEG-4 IPMP EXTENDED ISMA MEDIA STREAM**

(30) Priority: 09.05.2003 JP 2003131856
(71) Applicant: MATSUSHITA ELECTRIC INDUSTRIAL CO., LTD., Kadoma-shi, Osaka 571-8501 (JP)
(72) Inventor: JI, Ming, 389758 Singapore (SG); LIU, Jing, 271003 Singapore (SG); SHEN, Sheng, Mei, 03-02 Windermere, 689093 Singapore (SG); UENO, Takafumi, Nara-shi, Nara 631-0001 (JP)
(74) Representative: Eisenführ, Speiser & Partner
(86) International application number: PCT/JP2004/006285
(87) International publication number: WO 2004/100441

(57) **Abstract**

A receiver, which receives an ISMA media stream that is MPEG-4 IPMP-expanded, is provided with processes of: receiving an ISMA media stream containing an ISMA head, contents and an IPMP tool list descriptor that indicates a method for processing the contents; acquiring the IPMP tool list descriptor from the ISMA media stream; making an inspection as to whether or not the tool indicated by the IPMP tool list descriptor is present in the receiver, and when the tool is present, processing the contents by using the tool, while, when the tool is not present, completing the processes without causing any failure.

## Description

### FIELD OF THE INVENTION

The present invention relates to an MPEG-4 IPMP expansion that is compatible with an ISMA protective framework.

### BACKGROUND ART

In these several years, in the medium contents distribution industry, efforts for guaranteeing distribution of the video and the sound through the Internet have been widely made. Various standardizing organizations have made great efforts to provide a solution for this subject. One of these organizations is Internet Streaming Media Alliance (ISMA). In order to satisfy these needs, this organization has proposed a framework which uses the existing open standard, and can be used for allowing vendors to create a video and sound system that is applicable to the IP framework and the Internet. The specification thereof, which is based on the assumption that the existing MPEG techniques are used, is mainly focused on the existing MPEG-4 technique; however, it is planned to carry out alterations and revisions including MPEG-2 and MPEG-7 techniques in the future.

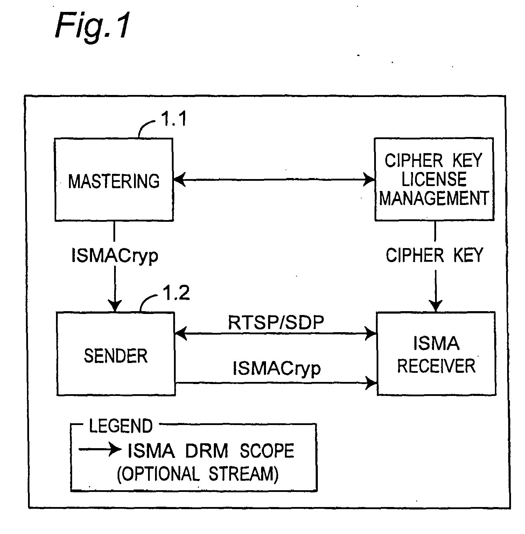

The ISMA also specifies a cryptographic framework for ISMA media stream, that is, ISMACryp. This framework can be expanded to a new media encoding process and applied to a new cryptographic process, and is also used for various cipher key managements, security or digital right management (DRM) systems. This framework also specifies the default encryption system for authentication of a media stream and a media message for use in the ISMA specification. FIG. 1 is a drawing that shows an ISMACrypt protective architecture for use in the ISMA framework. The range of ISMA DRAM of FIG. 1 covers encryption of ISMA media and authentication of ISMA messages, and in this Figure, is labeled as "ISMACryp", and the signaling of ISMACryp is labeled as "RTSP/SDP+" (ISMA1.0 SDP Definition·Plus ISMACryp Signaling". Mastering (1.1) functions so as to prepare and issue contents. A protocol used for a key/license managing interface is located out of the range of the ISMACryp. Moreover, in FIG. 1, the delivery of a key (or a license) from the key/license management to an ISMA receiver is located out of the range of ISMACryp. The objective of technical developments of the ISMCryp is considered to provide a safe method for delivering information as described above to the terminal. A sender (1.2) functions so as to carry out a delivery to an ISMA receiver through an open standard protocol referred to as "ISMACryp" that is signaled by the ISMA sender using PTSP/SDP + (ISMA1.0 SDP Definition·Plus ISMACryp Signaling" or by a third device.

In the ISMA DRM architecture, the ISMA receiver can process an ISMCryp encrypted stream, an authenticated message and a signaling. "ISMACryp" refers to a technique to provide a protocol that has an ISMA1.0 medium and encryption, message authentication and total services.

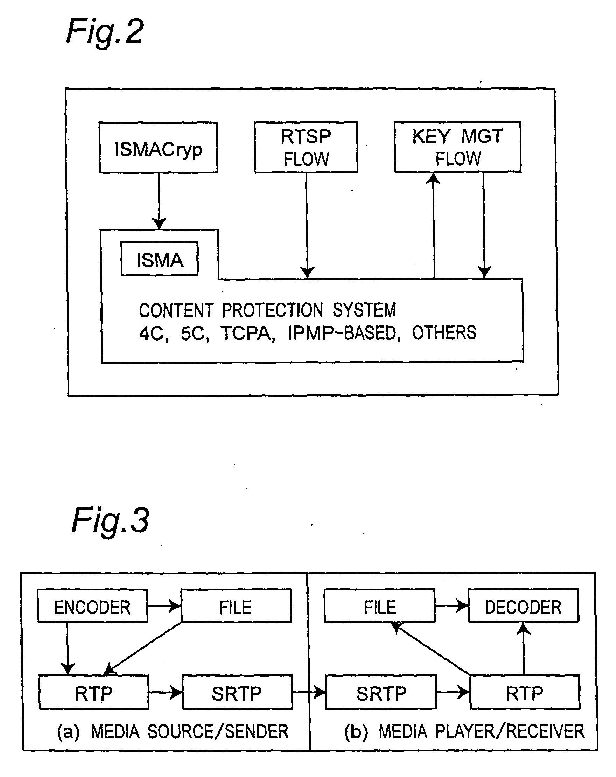

FIG. 2 is a drawing that shows an ISMA receiver architecture that includes a key/license managing (KEY MGT) and RTSP control interface and an interface to ISMACryp that provides an encryption system for ISMA data in detail. The ISMACryp receiver can encrypt ISMA data, authenticate the data and check the completeness thereof.

FIG. 3 is a drawing that shows an ISMACryp environment in which a mastering process of a stream is performed on a file or a stream is directly given to a network from its encoding process. In each of the cases, the stream is encrypted before its delivery; however, the message authentication is carried out upon delivery. In the receiver (medium reproducing device/decoder), the stream is received by a file such as a player and a personal recorder in a cash server, or is directly received by a decoder. An ISMACryp conversion is carried out by an encoder/sender, and a decoding process is carried out on an arc that is terminated at a decoder/receiver.

In accordance with the ISMA's statement, receivers of two types, that is, an ISMA dedicated receiver and an MPEG system-enabled receiver are used as subject receivers. In this case, "the ISMA dedicated receiver" is defined as a receiver that is not applicable to the MPEG-4 system, that is, a receiver that cannot process any control (basic) streams relating to MPEG-4 signal notification (signaling) and MPEG-4 (basic) media streams. In contrast, "the MPEG system-enabled receiver" is allowed to process not only ISMA related information, but also MPEG-4 system layer information. The mutual operability with the MPEG system-enabled receiver is achieved through an MPEG IOD (initial object description) that transfers at least a minimum MPEG system signaling. The IOD is contained as a binary SDP (session description protocol) attribute, that is, as SDP IOD.

The ISMACryp is also applied to the receivers of both of the types. The binary IOD inside an SDP message is expanded. The new signaling is mainly focused on asymmetry rather than redundancy that appears in the ISMA signaling. By supplying "minimum" and "basic" signaling parameters of SDP IOD, the mutual operability of the receiver with the MPEG-4 IPMP system is maximized.

However, the IOD expansion specified by the current ISMACryp is not perfect, and no matching is made with the latest MPEG-4 IPMP expansion standard. As a result, there is a possibility that the ISMA stream might not be correctly recognized by the MPEG-4 IPMP expansion compatible receiver. For example, the ISMACryp standard defines that a signaling process for ISMACryp protection is carried out by using an IPMP_Descriptor that is present in the IOD. However, in accordance with the MPEG-4 IPMP expansion, in the case when the IPMP protection is present, a tool list descriptor should be set up in the IOD. These incompleteness and inconsistency might inhibit the mutual operability of the ISMA framework with an MPEG-4 IPMP expansion compatible receiver.

The present invention has been devised to solve the following problems.

The ISMACryp standard specifies a signaling process for ISMACryp protection by using MPEG-4 IPMP through an IOD expansion inside the SDP. The presence of an IPMP_Descriptor inside the IOD informs a receiver of the fact that this media stream is protected. However, an MPEG-4 IPMP expansion non-compatible receiver is allowed to process the stream by using a unique, but appropriate method. For example, the stream is simply ignored. However, the MPEG-4 IPMP expansion standard specifies that a tool list descriptor should be set up in the IOD to indicate the IPMP protection. The standard does not guarantee the presence of an IPMP_Descriptor in the IOD for the IPMP protection. Therefore, a signaling method, specified by the ISMACryp, might fail to accurately detect a system for protecting a media stream in which, although the IOD includes a tool list descriptor, it does not include an IPMP_Descriptor.

Moreover, in order to allow an MPEG-4 IPMP expansion compatible receiver to receive ISMA related data, for example, encrypted information and KMS structure derived from IPMP data, the ISMACryp standard expands the IPMP_Descriptor inside the IOD by using an ISMACryp_Descriptor that is self-specified based upon the MPEG-4 IPMP standard. However, since the revision of the MPEG-4 IPMP standard takes place quickly, the syntax of the IOD has been altered, and is different from that of the previous version on which the ISMACryp standard has been based. This fact tends to cause a problem in that the ISMA related data stored in the IPMP context might not be recognized by a receiver that is compatible with the latest MPEG-4 IPMP expansion standard. In order to maintain the consistence of the latest MPEG-4 IPMP expansion standard with changes in the already specified ISMA parameters being kept to the minimum, there have been strong demands for a new system capable of storing ISMA related data based upon the current MPEG-4 IPMP expansion standard, and this system is required to have a backward compatible property (backward compatibility) with respect to the previous version of the MPEG-4 IPMP expansion standard.

### SUMMARY OF THE INVENTION

The objective of the present invention is to provide an MPEG-4 IPMP expansion that has a compatible property with respect to the ISMA protection framework.

In order to solve problems related to signaling, the present invention provides a signaling mechanism that carries out a signaling process for the presence of ISMACryp protection in an MPEG initial object descriptor (IOD). The signaling process for the protection is carried out by using a tool list and an IPMP descriptor. This means, which is compatible with the latest MPEG-4 IPMP expansion standard, simultanously provides a maximum compatibility with an MPEG system-enabled ISMA receiver. Moreover, the present invention also provides a flexible method for recognizing a tool that is called for so as to reproduce contents.

The present invention also provides a system in which an ISMACryp parameter is stored and converted so as to be used for an MPEG system-enabled ISMA receiver. Thus, ISMA dedicated Cryp_Data is expanded from an IPMP_Data_BaseClass specified by the MPEG-4 IPMP expansion so that an ISMACryp parameter can be stored. This ISMACryp_Data may be then stored in an IPMP descriptor or an IPMP stream so as to be in compliance with the MPEG-4 IPMP expansion standard.

A device in accordance with the present invention, which receives an ISMA media stream that is MPEG-4 IPMP-expanded, receives an ISMA media stream containing an ISMA head, contents and an IPMP tool list descriptor that indicates a method for processing the contents, acquires the IPMP tool list descriptor from the ISMA media stream, makes an inspection as to whether or not the tool indicated by the IPMP tool list descriptor is present in the receiver, and when the tool is present, processes the contents by using the tool, while, when the tool is not present, it completes the processes without causing any failure.

Here, the expression, "it completes the processes without causing any failure", means that the processes are completed after predetermined processes have been finished. The term, "failure", for example, refers to a phenomenon such as a hang-up.

Moreover, the ISMA media stream has an IOD, and the IPMP tool list descriptor is acquired from the IOD.

Furthermore, a device in accordance with the present invention, which receives an ISMA media stream that is MPEG-4 IPMP-expanded, receives an ISMA media stream containing an ISMA head, contents and an IPMP descriptor that indicates a method for processing the contents, acquires the IPMP descriptor from the ISMA media stream, makes an inspection as to whether or not the tool indicated by the IPMP descriptor is present in the receiver, and when the tool is present, processes the contents by using the tool, while, when the tool is not present, it completes the processes without causing any failure.

Moreover, the ISMA media stream further includes an IPMP descriptor pointer that indicates the IPMP descriptor, and the receiver preferably acquires the IPMP descriptor pointer from the ISMA media stream so as to acquire the IPMP descriptor having an address indicated by the IPMP descriptor pointer.

In another preferable structure, the receiver may acquire the IPMP descriptor pointer from an ES descriptor in the ISMA media stream so as to acquire the IPMP descriptor indicated by the IPMP descriptor pointer from the OD of the ISMA media stream.

Moreover, in the case when an ISMACryp decoding tool is specified by the IPMP descriptor, the ISMACryp decoding tool may be activated so as to decode the contents.

In still another preferable structure, the receiver may take out an ISMACryp parameter from the ISMACryp_Data stored in the IPMP descriptor, and sets an ISMACryp decoding tool by using the ISMACryp parameter thus taken out to carry out a decoding process on the contents.

Moreover, in still another preferable structure, the receiver may take out an ISMACryp parameter from the ISMACryp_Data stored in an IPMP message inside the IPMP stream of the ISMA media stream, and sets an ISMACryp decoding tool by using the ISMACryp parameter thus taken out to carry out a decoding process on the contents.

In still another preferable structure, the ISMA media stream further includes the IPMP tool list descriptor that indicates at least one tool, in addition to the IPMP descriptor, and the receiver acquires the IPMP tool list descriptor or the IPMP descriptor so as to make an inspection as to whether or not the tool indicated by the IPMP tool list descriptor or the IPMP descriptor is present in the receiver.

Here, an IOD and an OD are formed in the ISMA framework. The IPMP tool list descriptor is embedded in the IOD, and when an ISMACryp protection is present, the IPMP descriptor pointer and the IPMP descriptor are respectively embedded in the IOD and the OD.

The IOD and OD are transferred to the ISMA receiver that recognizes the MPEG-4 system through an SDP IOD signaling process. The receiver analyzes the IOD and OD. Upon detection of an IPMP tool list, the receiver recognizes the presence of the ISMACryp protection. Upon detection of the IPMP descriptor pointer and the IPMP descriptor, the receiver recognizes which stream is protected by which tool.

In the case when the stream is protected by an ISMAMACryp inside the ISMA framework, the ISMACryp parameter (for example, cipher identifier) is stored in the ISMACryp_Data, and allowed to enter the IPMP descriptor or IPMP stream, and the storage of the parameters is in compliance with the MPEG-4 IPMP expansion.

On the receiver side, a parameter for ISMACryp can be taken out from the IPMP descriptor or the IPMP stream, while maintaining compatibility with the MPEG-4 IPMP expansion. Next, an ISMACryp decoding tool is set by using this parameter.

By using the present invention, the ISMA protection framework can be mutually operated with the MPEG-4 IPMP expansion compatible receiver.

The present invention carries out a signaling process on the ISMACryp protection by using the tool list in the IOD and the IPMP descriptor in the OD. With this arrangement, the signaling method is made more flexible, and allowed to have a definite compatible property with the latest MPEG-4 IPMP expansion standard so that the MPEG-4 IPMP system-enabled ISMA receiver can be mutually operated.

The present invention also generates ISMACryp_Data expanded from IPMP_Data_BaseClass. By using the ISMACryp Data of the present invention, an ISMACryp parameter is stored, and is successively stored in either the IPMP descriptor or the IPMP stream. At present, storing the ISMACryp parameter forms one of observance matters with respect to MPEG-4 IPMP expansion.

### BRIEF DESCRIPTION OF THE DRAWINGS

These objects and other objects, features, aspects and advantages of the present invention will become more apparent from the following detailed description of the present invention when taken in conjunction with the accompanying drawings:
FIG. 1 is a drawing of an architecture of ISMACryp;
FIG. 2 is a drawing of an architecture of an IPMPCryp receiver;
FIG. 3 is a drawing of flows between protection terminals used in the IPMPCryp;
FIG. 4 is a drawing of an MPEG-4 IPMP expansion contents structure;
FIG. 5 is a drawing of a protection signaling process using an IPMP descriptor;
FIG. 6 is a drawing of IPMP information in an IOD brought into an SDP; and
FIG. 7 is a flow chart of an IPMP-X process in an ISMA receiver.

### DESCRIPTION OF THE PREFERRED EMBODIMENTS

### IPMP expansion signaling

The current ISMACryp is applicable to an SDP IOD signaling process directed to an ISMA-dedicated receiver and an MPEG receiver. The ISMA-dedicated receiver receives only the SDP FMTP signaling parameter; however, the SDP IOD has its stream ISMACryp-protected (minimum IPMP signaling), and needs to carry out a signaling process on an arbitrary MPEG receiver. The KMS may carry out a signaling process on the ISMACryp by using only the IPMP signaling (basic IPMP signaling) inside the SDP IOD.

The present specification provides a syntax that is compatible with the MPEG-4 IPMP expansion. Thus, the ISMACryp is allowed to easily achieve the compatibility with the MPEG-4 IPMP expansion with the minimum labor, and also provides a further flexible protection scheme.

### Minimum IPMP-X signaling

The IPMP expansion specifies an IPMP tool list descriptor in the IOD. The tool list descriptor recognizes an IPMP tool list that is required for a stream string, which will be described later. In accordance with the MPEG-4 IPMP expansion, when the IPMP protection is present, the tool list descriptor should be presented inside the IOD. Therefore, in the case of the minimum IPMP-X signaling, in order to achieve this objective, it is proposed to use the IPMP tool list descriptor inside the IOD, instead of the IPMP descriptor.

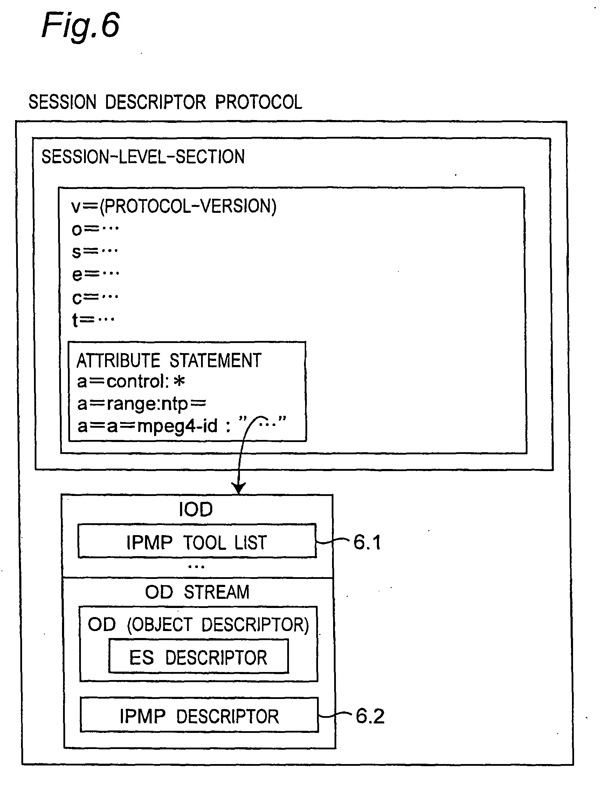

The position of the IPMP tool list in the IOD brought into the MPEG-4 IOD by the SDP is indicated as 6.1 in FIG. 6.

In accordance with the current ISMCryp specification that specifies the encryption and KMS information transfer, at least two tools should be listed in the MPEG IPMP tool list descriptor. The first tool corresponds to a KMS tool, and the other tool is an ISMA decoding tool. The presence of the ISMCryp tool in the MPEG IPMP tool list provides a signaling process of the ISMACryp protection.

Table 1 shows an example of a tool list descriptor having an ISMACryp tool.

**Table 1**

| | IPMP_ToolListDescriptor | | |
|---|---|---|---|
| 1 | 8 | IPMP_ToolListDescTag | 0×60 |
| 2 | 16 | Size of descriptor | |
| | | IPMP_Tool | |
| 3 | 8 | IPMP_ToolTag | 0×61 |
| 4 | 16 | Size of descriptor | |
| 5 | 128 | IPMP_ToolID | The value is assigned by each service provider to its own KMS tool. |
| 6 | 1 | isAltGroup | 0 |
| 7 | 1 | isParametric | 0 |
| 8 | 6 | Reserved | 0b0000.00 |
| 9 | 8 | Size of tool URL | |
| 10 | | Tool URL | |

| | | IPMP_Tool | |
|---|---|---|---|
| 11 | 8 | IPMP_ToolTag | 0×61 |
| 12 | 16 | Size of descriptor | |
| 13 | 128 | IPMP_ToolID | The value is assigned to ISMA decoding tool. |
| 14 | 1 | isAltGroup | 0 |
| 15 | 1 | isParametric | 0 |
| 16 | 6 | Reserved | 0b0000.00 |
| 17 | 8 | Size of tool URL | |
| 18 | | Tool URL | |

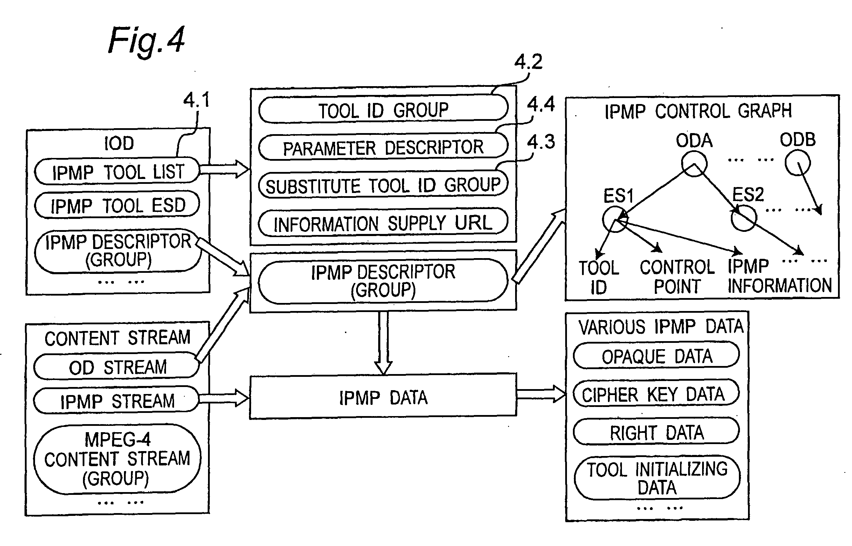

The IPMP tool list is indicated by an MPEG-4 IPMP expansion contents structure shown in FIG. 4. By using the IPMP tool list (4.1), it becomes possible not only to easily carry out a signaling process indicating the presence of the ISMACryp protection, but also to identify the tool more flexibly. The IPMP tool in the tool list can be identified by using three methods. In the first method, with respect to the value, a fixed 128 bit IPMP_Tool ID (4.2), assigned by the public registering organization, is used. In the second method, a list of IPMP_Tool ID (4.3) indicating a tool that is mutually equal substitute is used. By using this, the terminal is allowed to select its own tool more flexibly. In the last method, a parameter notation (4.4) that is used for describing a standard to be satisfied by the IPMP tool is used, and in this case, the terminal is allowed to have a greater degree of freedom in selecting a tool to be used for executing a required function.

### BASIC IPMP-X signaling

In the case of the MPEG system-enabled receiver, more IPMP information is required for IPMP-related processes. With respect to the base for MPEG IPMP extension signaling with higher performances, the following IPMP-X signaling is used. Together with the tool list introduced in Section 2, base information required by the MPEG compatible receiver is supplied. With respect to the encrypted basic stream, the corresponding ES descriptor needs to include the following IPMP_DescriptorPointer (Table 2).

**Table 2**

| Name of descriptor | | | | |
|---|---|---|---|---|
| Field number | Bit size | Field name | | Value |
| | | | IPMP_DescriptorPointer | |
| 1 | 8 | IPMP DescriptorPointer tag | | 10 |
| 2 | 8 | Descriptor size | | 5 |
| 3 | 8 | IPMP_DescriptorID | | 0×FF |
| 4 | 16 | IPMPX_DescriptorID | | 0×0002/0×0003 |
| 5 | 16 | IPMPX_ES_ID | | 0×0000 |

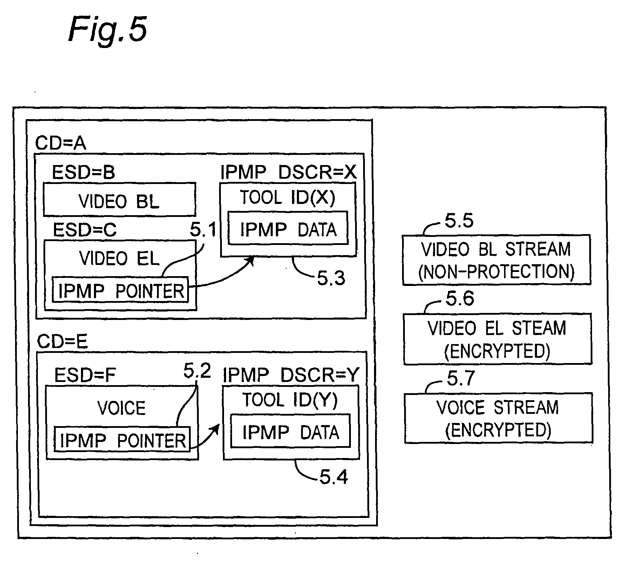

FIG. 5 shows the concept of this IPMP expansion protection signaling. Since these descriptor pointers (5.1 and 5.2) are present in the ES_Descriptor, streams associated with these descriptors are indicated as subjects that are protected and controlled by IPMP tools specified by reference IPMP_Descriptors (5.3 and 5.4). The reference IPMP_Descriptor shown in Table 3 should be stored in an object descriptor.

The position of the IPMP descriptor in the OD stream brought into the MPEG-4 IOD by the SDP is indicated as symbol 6.2 in FIG 6.

**Table 3**

| Name of descriptor | | | | | |
|---|---|---|---|---|---|
| Field number | Bit size | Field name | | | Value |
| | | | IPMP_Descriptor | | |
| 1 | 8 | IPMP_Descriptor tag | | 11 | |
| 2 | 8 | Size of descriptor | | 23 | |
| 3 | 8 | IPMP_DescriptorID | | 0×FF | |
| 4 | 16 | IPMPS_Type | | 0×FFFF | |
| 5 | 16 | IPMP_DescriptorIDEx | | 0×0002/0×0003 | |
| 6 | 128 | IPMP_ToolID | | The value is assigned to ISMA decoding tool. | |
| 7 | 8 | Control point code | | 0×01 (between decoding buffer and decoder) | |
| 8 | 8 | Sequence code | | 0×80 | |

Moreover, the IOD needs to include the following IPMP_DescriptorPointer (Table 4). The following examples show that a specific DRM tool indicated by a reference descriptor (cipher key managing system) needs to be intance-generated in a global-scope.

**Table 4**

| Name of descriptor | | | | |
|---|---|---|---|---|
| Field number | Bit size | Field name | | Value |
| | | | IPMP_DescriptorPointer | |
| 1 | 8 | IPMP_DescriptorPointer tag | | 10 |
| 2 | 8 | Size of descriptor | | 5 |
| 3 | 8 | IPMP_DescriptorID | | 0×FF |
| 4 | 16 | IPMP_DescriptorIDEx | | 0×0001 |
| 5 | 16 | IPMP_ES_ID | | 0×0000 |

The above-mentioned IPMP_DescriptorPointer indicates IPMP_Descriptor with IPMP_DescriptorlDEx of 0 × 0001. Next, the specified IPMP_Descriptor needs to be presented in the IOD (Table 5). It is noted that in the case of KMS, the control point of the descriptor should be set at 0 × 00 so as to indicate the global-scope thereof.

**Table 5**

| Name of descriptor | | | | |
|---|---|---|---|---|
| Field number | Bit size | Field name | | Value |
| | | | IPMP_Descriptor | |
| 1 | 8 | IPMP_Descriptor tag | | 11 |
| 2 | 8 | Size of descriptor | | 22 |
| 3 | 8 | IPMP_DescriptorID | | 0×FF |
| 4 | 16 | IPMPS_Type | | 0×FFFF |
| 5 | 16 | IPMP_DescriptorIDEx | | 0×0001 |
| 6 | 128 | IPMP_ToolID | | The value is assigned by each service provider to its own KMS tool. |
| 7 | 8 | Control point code | | 0×00(No control point) |

Storage of ISMACryp data in a manner so as to be compatible with IPMP expansion

The ISMACryp describes encryption of a stream by using a set of parameters. The set of parameters are listed below:

**Table 6**

| Parameter | Value | Meaning | Default |
|---|---|---|---|
| Cypto-suite | 1..255 | Cipher, Mode, Key Length, etc. | 1¹⁾ |
| IV-length | 1..8 | Length of a byte unit of IV | 4 |
| Delta-IV-length | 0..2 | Length of a byte unit of delta IV | 0 |
| Selective-encryption | 0..1 | Upon selectively encrypting a stream, "1" is set up. | 0 |
| Key-indicator per-AU | 0..1 | Upon appearance of a plurality of key indicators in a packet, "1" is set up. | 0 |
| Key-indicator-length | 0..255 | Length of a byte unit of key indicator | 0 |

| | | | |
|---|---|---|---|
| ¹⁾ AES-CTR Default of Section 10.0 | | | |

In order to store a parameter in a manner so as to be compatible with IPMP expansion, the ISMACryp_Date is expanded from IPMP_Data_BaseClass specified by IPMP-X. The IPMP_Data_BaseClass is specified by MPEG-4 IPMPX as shown below:

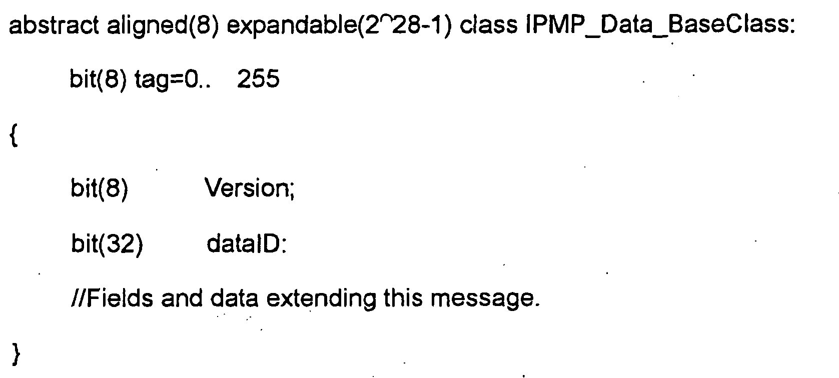

The ISMACryp_Data is expandable from the above-mentioned base class by using a user defined tag. Then, the data is allowed to have its own set of fields so as to store parameters. Thus, compatibility with an ISMA terminal of a different machine type that interprets the same contents stream is ensured.

This ISMACryp_Data can be stored in two places by using a standard method. The first storage place is the IPMP descriptor. Table 7 shows an example of an IPMP descriptor having this ISMACryp_Data.

**Table 7**

| Name of descriptor | | | | |
|---|---|---|---|---|
| Field number | Bit size | Field name | | Value |
| | | | IPMP_Descriptor | |
| 1 | 8 | IPMP_Descriptor tag | | 11 |
| 2 | 8 | Size of descriptor | | 23 |
| 3 | 8 | IPMP_DescriptorID | | 0×FF |
| 4 | 16 | IPMP_Type | | 0×FFFF |
| 5 | 16 | IPMP_DescriptorIDEx | | 0×0002/0×0003 |
| 6 | 128 | IPMP_ToolID | | The value is assigned to ISMA descriptor tool. |
| 7 | 8 | Control point code | | 0×01(between decoding buffer and decoder) |
| 8 | 8 | Sequence code | | 0×80 |

| | | | ISMACryp_Data | |
|---|---|---|---|---|
| 7 | 8 | ISMACryp_DataTag | | to be specified |
| 8 | 8 | Data size | | 20 |
| 9 | 8 | Set of ciphers | | Encryption descriptor |
| 11 | 4 | IV-length | | Length of a byte of initializing vector |
| 12 | 2 | Delta-IV-length | | Length of a byte of IV of AU base |
| 13 | 1 | Selective-encryption | | Indicated by "1" when selective encryption is used |
| 14 | 1 | Key-indicator-per-Au | | Upon appearance of a plurality of key indicators in a packet, "1" is set up. |
| 15 | 8 | Key-indicator-length | | Length of a byte of key indicator |

The position of the IPMP descriptor in the OD stream brought into the MPEG-4 IOD by the SDP is indicated as symbol 6.2 in FIG 6.

The second method to store ISMACryp_Data is to store the data as a payload inside an IPMP_Message so that the data is successively stored in an IPMP stream as specified in the MPEG-4 IPMP expansion.

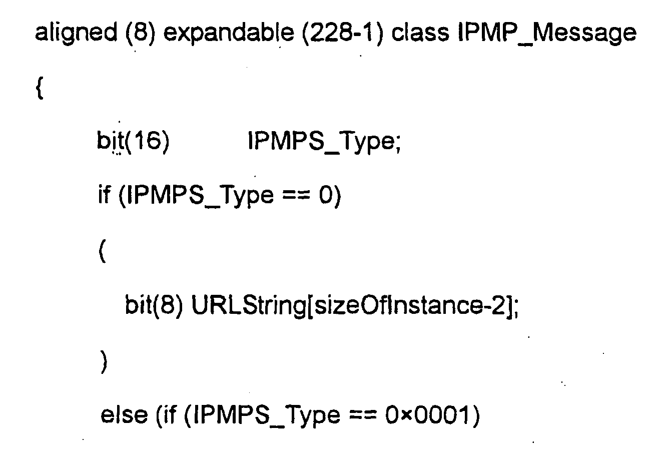

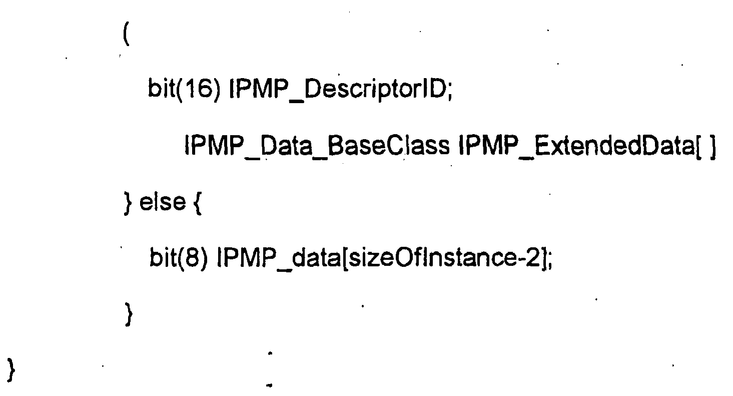

Table 8 shows a syntax when the IPMP_Message stores the ISMACryp_Data. The IPMP tool, specified by the IPMP descriptor having this IPMP_DescriptorIDEx, forms an address of the IPMP_Message.

**Table 8**

| Field number | Bit size | Field name | | Value |
|---|---|---|---|---|
| | | | IPMP_Message | |
| 1 | 16 | Message size | | |
| 2 | 16 | IPMPS_Type | | 0×0001 |
| 3 | 16 | IPMPS_Dscriptorldex | | |

| | | | ISMACryp_Data | |
|---|---|---|---|---|
| 4 | 8 | ISMACryp_DataTag | | To be specified |
| 5 | 8 | Data size | | 20 |
| 6 | 8 | Set of ciphers | | Encryption identifier |
| 7 | 4 | IV-length | | Length of a byte of initializing vector |
| 8 | 2 | Delta-IV-length | | Length of a byte of IV of AU base |
| 9 | 1 | Selective-encryption | | Indicated by "1" when selective encryption is used |
| 10 | 1 | Key-indicator-per-Au | | Upon appearance of a plurality of key indicators in a packet, "1" is set up. |
| 11 | 8 | Key-indicator-length | | Length of a byte of key indicator |

Process of IPMPX signaling in an ISMA receiver

In accordance with the above-mentioned IPMPX signaling, the ISMA receiver is allowed to specify whether or not the stream is protected and when it is protected, to further specify how to process the stream.

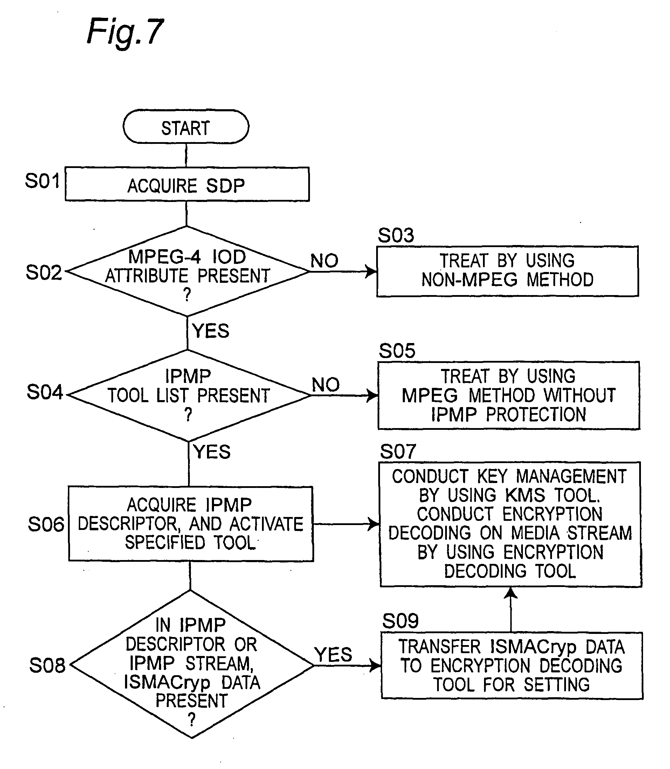

In the case when an SDP parameter describing a media stream associated by the ISMA receiver is acquired (S01), a check is made as to whether or not an attribute referred to as MPEG-4 IOD is present (S02), and when it is present, the associated media stream is identified as a stream compatible with an MPEG-4 system. When it is not present, the stream is processed by a non-MPEG method (S03). Next, a check is made as to whether or not an IPMP tool list is present in the MPEG-4 IOD (S04). When the IPMP tool list is present in the MPEG-4 IOD, it is determined whether or not the media stream is protected by using the IPMP expansion. Then, tools are activated in accordance with the Tool_ID specified by the IPMP descriptor (S06). By activating a KMS tool, key managing operations are dealt, and by activating an encryption decoding tool, an encryption decoding process is carried out on the media stream at a specified control point (S07). Moreover, a check is made as to whether or not any ISMACryp_Data brought into the IPMP descriptor or the IPMP stream is present (S08), and when it is present, the data is transferred to the encryption decoding tool, and set therein (S09). Here, when no IPMP tool list is present at step S04, the processes are carried out by using an MPEG method without IPMP protection (S05). FIG. 7 shows the above-mentioned processes.

Here, the present invention may have the following structures indicated by various embodiments. In accordance with the first structure, a device, which flexibly protects an ISMA media stream by using an MPEG-4 IPMP expansion on an ISMA receiver side, is provided with the steps of: receiving an IPMP tool list descriptor from IOD; inspecting tools shown in the tool list; when an ISMACryp decoding tool is recognized by a tool ID, inspecting whether or not the ISMACryp decoding tool is present; and if it is not present, allowing the receiver to refuse the receipt without any failure; and the steps of: inspecting tools shown in the tool list; when an ISMACrypKMS tool is recognized by a tool ID, inspecting whether or not the ISMACrypKMS tool is present; and if it is not present, allowing the receiver to refuse the receipt without any failure.

In accordance with the second structure, the device, which flexibly protects an ISMA media stream by using an MPEG-4 IPMP expansion on the above-mentioned ISMA receiver side, is designed so that the step of inspecting the IPMP tool list is further provided with the steps of: receiving an IPMP descriptor pointer from an ES descriptor and receiving a reference IPMP descriptor from OD; when an ISMACryp decoding tool is specified by the IPMP descriptor; activating the ISMACryp decoding tool so that a decoding process of a protected media stream is started in accordance with the description of the ES descriptor.

In accordance with the third structure, the device, which flexibly protects an ISMA media stream by using an MPEG-4 IPMP expansion on the above-mentioned ISMA receiver side, is designed so that the step of inspecting the IPMP tool list is further provided with the steps of: receiving an IPMP descriptor pointer from an ES descriptor and receiving a reference IPMP descriptor from OD; when an ISMACryp decoding tool is specified by the IPMP descriptor, activating the ISMACryp decoding tool; taking out an ISMACryp parameter from the ISMACryp_Data stored in the IPMP descriptor, and setting an ISMACryp decoding tool by using the ISMACryp parameter thus taken out so that a decoding process of a protected media stream is started by reference to the ES descriptor.

In accordance with the fourth structure, the device, which flexibly protects an ISMA media stream by using an MPEG-4 IPMP expansion on the above-mentioned ISMA receiver side, is designed so that the step of inspecting the IPMP tool list is further provided with the steps of: receiving an IPMP descriptor pointer from an ES descriptor and receiving a reference IPMP descriptor from OD; and when an ISMACryp decoding tool is specified by the IPMP descriptor, activating the ISMACryp decoding tool; taking out an ISMACryp parameter from the ISMACryp_Data stored in the IPMP message within the IPMP stream; and setting an ISMACryp decoding tool by using the ISMACryp parameter thus taken out so that a decoding process of a protected media stream is started by reference to the ES descriptor.

While the invention has been described in detail and with reference to specific embodiments thereof and is not limited to them, it will be apparent to one skilled in the art that various changes and modifications can be made therein without departing from the spirit and scope of the following claims.

## Claims

1. A receiver, which receives an ISMA media stream that is MPEG-4 IPMP-expanded, comprising the processes of:
receiving an ISMA media stream containing an ISMA head, contents and an IPMP tool list descriptor that indicates a method for processing the contents;
acquiring the IPMP tool list descriptor from the ISMA media stream;
making an inspection as to whether or not the tool indicated by the IPMP tool list descriptor is present in the receiver; and
when the tool is present, processing the contents by using the tool, while, when the tool is not present, completing the processes without causing any failure.

2. The receiver according to claim 1, wherein the ISMA media stream has an IOD, and the IPMP tool list descriptor is acquired from the IOD.

3. A receiver, which receives an ISMA media stream that is MPEG-4 IPMP-expanded, comprising the processes of:
receiving an ISMA media stream containing an ISMA head, contents and an IPMP descriptor that indicates a method for processing the contents;
acquiring the IPMP descriptor from the ISMA media stream;
making an inspection as to whether or not the tool indicated by the IPMP descriptor is present in the receiver; and
when the tool is present, processing the contents by using the tool, while, when the tool is not present, completing the processes without causing any failure.

4. The receiver according to claim 3, wherein the ISMA media stream further includes an IPMP descriptor pointer that indicates the IPMP descriptor, and the receiver acquires the IPMP descriptor pointer from the ISMA media stream so as to acquire the IPMP descriptor having an address indicated by the IPMP descriptor pointer.

5. The receiver according to claim 4, wherein the receiver acquires the IPMP descriptor pointer from an ES descriptor in the ISMA media stream so as to acquire the IPMP descriptor indicated by the IPMP descriptor pointer from the OD of the ISMA media stream.

6. The receiver according to any one of claims 3 to 5, wherein, in the case when an ISMACryp decoding tool is specified by the IPMP descriptor, the ISMACryp decoding tool is activated so as to decode the contents.

7. The receiver according to claim 6, further comprising the processes of: taking out an ISMACryp parameter from the ISMACryp_Data stored in the IPMP descriptor; and setting an ISMACryp decoding tool by using the ISMACryp parameter thus taken out to carry out a decoding process on the contents.

8. The receiver according to claim 6, further comprising the processes of: taking out an ISMACryp parameter from the ISMACryp_Data stored in an IPMP message in the IPMP stream of the ISMA media stream; and setting an ISMACryp decoding tool by using the ISMACryp parameter thus taken out to carry out a decoding process on the contents.

9. The receiver according to claim 3, wherein the ISMA media stream further includes the IPMP tool list descriptor that indicates at least one tool, in addition to the IPMP descriptor, and the receiver acquires the IPMP tool list descriptor or the IPMP descriptor so as to make an inspection as to whether or not the tool indicated by the IPMP tool list descriptor or the IPMP descriptor is present in the receiver.
